# EUROPÄISCHE PATENTSCHRIFT

(11) **EP 1 072 034 B1**
(45) Veröffentlichungstag und Bekanntmachung des Hinweises auf die Patenterteilung: **13.02.2002**
(21) Anmeldenummer: 99924665.5
(22) Anmeldetag: 22.03.1999
(51) Int. Cl.: G10K 9/22, G01S 7/521

(54) **KONTAKTELEMENT FÜR EINEN ULTRASCHALLSENSOR**
CONTACT ELEMENT FOR AN ULTRASOUND SENSOR
ELEMENT DE CONTACT POUR UN DETECTEUR ULTRASONORE

(30) Priorität: 14.04.1998 DE 19816456
(43) Veröffentlichungstag der Anmeldung: 31.01.2001
(73) Patentinhaber: TRW Automotive Electronics & Components GmbH & Co. KG, 78315 Radolfzell (DE)
(72) Erfinder: SCHÖN, Uwe, D-66540 Neunkirchen (DE); HACKE, Frank, D-78256 Stei lingen (DE); PETER, Cornelius, D-77815 Brühl (DE)
(74) Vertreter: Eder, Thomas, Dr.-Ing.
(86) Internationale Anmeldenummer: DE9900825
(87) Internationale Veröffentlichungsnummer: WO9953475

(56) Entgegenhaltungen:
- US-A- 3 879 726
- US-A- 4 703 656
- PATENT ABSTRACTS OF JAPAN vol. 014, no. 344 (E-0955), 25. Juli 1990 (1990-07-25) & JP 02 116299 A (MATSUSHITA ELECTRIC IND CO LTD), 27. April 1990 (1990-04-27)

## Beschreibung

Die Erfindung betrifft einen Ultraschallsensor, insbesondere für ein Fahrzeug und dessen Innenraum, mit den Merkmalen des oberbegriffs des Anspruchs 1 und ein Herstellungsverfahren hierfür.

Bekannte derartige Ultraschallsensoren, wie beispielsweise in der JP 02 116 299 A1 offenbart, weisen ein napfförmiges Gehäuse auf, an dessen Bodeninnenseite ein Piezoelement aufgeklebt ist, so dass sich die Schwingungen des Napfbodens auf das Piezoelement übertragen können. Die Elektroden des Piezoelements sind über angelötete oder geschweißte Leitungen nach außen geführt, wobei das napfförmige Gehäuse mittels eines zusätzlichen Kunstharz- bzw. Kunststoffvergusses abgeschlossen ist. Die durch diesen Abschluss nach außen geführten Leitungen dienen dem Anschluss an eine Elektronik, durch welche das Schwingungsverhalten des Piezoelements und der dadurch abgegebenen Stromcharakteristik ausgewertet werden kann.

Derartige bekannte Ultraschallsensoren weisen den Nachteil auf, dass u.a. zur Zugentlastung der Leitungen das napfförmige Gehäuse durch einen zusätzlichen Verguss, durch den die den Verguss durchdringenden Leitungen fixiert sind, abgeschlossen werden muss. Weiterhin genügen derartige bekannte Sensoren nicht der Forderung nach einer höheren Empfindlichkeit und Exaktheit bei der Darstellung von aufgenommenen Schallwellen.

Der vorliegenden Erfindung liegt deshalb die Aufgabe zugrunde, einen Ultraschallsensor zu schaffen, der bei einfachem und kostengünstigem Aufbau geeignet ist, Schallwellen bzw. Ultraschallwellen besser aufzunehmen und in eine Stromantwort umzusetzen sowie ein Verfahren zur Herstellung eines derartigen Ultraschallsensors anzugeben.

Die Aufgabe wird erfindungsgemäß mit den Merkmalen der Ansprüche 1 und 14 gelöst.

Durch die Dickdrahtbondverbindung zwischen der Elektrode des Piezoelements und der ortsfest im Gehäuse befestigbaren Kontaktierungseinrichtung kann an dem Piezoelement ein Kontaktpunkt gewährleistet werden, der in seiner Lage reproduzierbar exakt definiert ist. Weiterhin weist ein derartiger Kontaktpunkt gegenüber bei Piezoelementen bekannten Kontaktpunkten vorteilhafterweise weniger Masse auf. Hierdurch ist es möglich, einen vorbestimmten Punkt an dem Piezoelement, der geeignet ist, das Schwingungsverhalten des Piezoelements möglichst gering zu beeinflussen, leicht reproduzierbar und mit hoher Genauigkeit als Kontaktpunkt zu verwenden. Durch die gegenüber bekannten Kontaktierungsverfahren geringere Masse des Verbindungspunktes kann durch den erfindungsgemäßen Dickdraht und Verbindungspunkt eine möglichst geringe Veränderung der Masse und somit des Schwingungsverhaltens des Piezoelements gewährleistet werden.

Die ortsfeste Kontaktierungseinrichtung gewährleistet zudem eine Zugentlastung der Leitungen, nämlich des Bonddrahtes, ohne dass hierfür, wie bei bekannten Ultraschallsensoren, ein zusätzlicher Verguss an der dem Gehäuseboden gegenüberliegenden Seite notwendig ist.

Weitere vorteilhafte Ausgestaltungen nach der Erfindung ergeben sich aus den Unteransprüchen. Die Erfindung wird nachfolgend anhand eines in der Zeichnung dargestellten Ausführungsbeispiels erläutert. In der Zeichnung zeigen:
- Fig. 1: eine perspektivische teilgebrochene Darstellung eines erfindungsgemäßen Ultraschallsensors;
- Fig. 2: eine perspektivische teilgebrochene Darstellung des Ultraschallsensors nach Fig. 1 vor Einsetzen des Deckels;
- Fig. 3: eine perspektivische Ansicht eines Stanzgitters;
- Fig. 4: eine perspektivische Ansicht eines Stanzgitters nach Fig. 3 nach einem weiteren Arbeitsschritt;
- Fig. 5: eine perspektivische Ansicht einer Kontaktierungseinrichtung mit einem Stanzgitter nach Fig. 4;
- Fig. 6: eine Seitenansicht eines Ultraschallsensorgehäuses im Schnitt und
- Fig. 7: eine Draufsicht auf das Gehäuse nach Fig. 6.

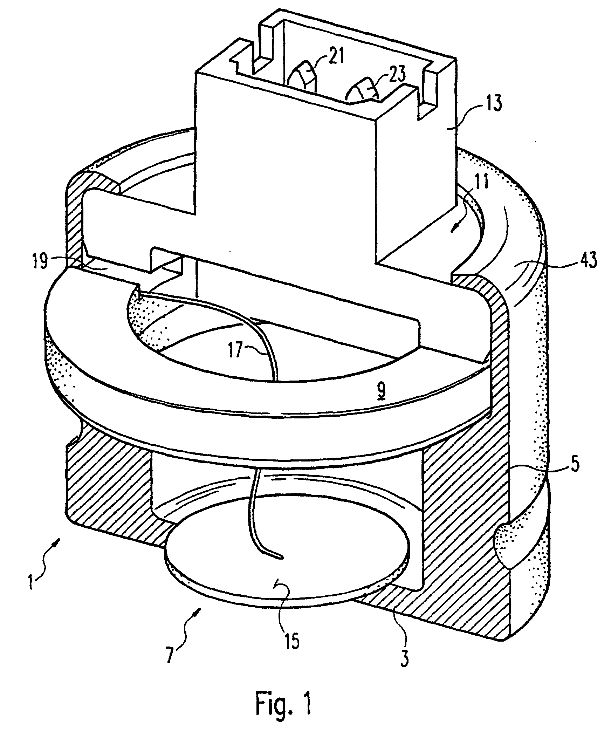

Der in Fig. 1 dargestellte Ultraschallsensor weist ein napf- bzw. dosenförmiges Gehäuse 1 auf, mit einem Gehäuseboden 3 und einem hohlzylinderförmigen Gehäusemantel 5. Diese Dosenform ist selbstverständlich nur beispielhaft für andere denkbare behälterförmige Gehäuse, beispielsweise Hohlquadergehäuse mit geraden oder verjüngend aufeinander zulaufenden Wandungen mit rundem oder mehreckigem Querschnitt, welche gerade oder in schiefer Ebene zueiander liegende Böden und Deckel aufweisen können.

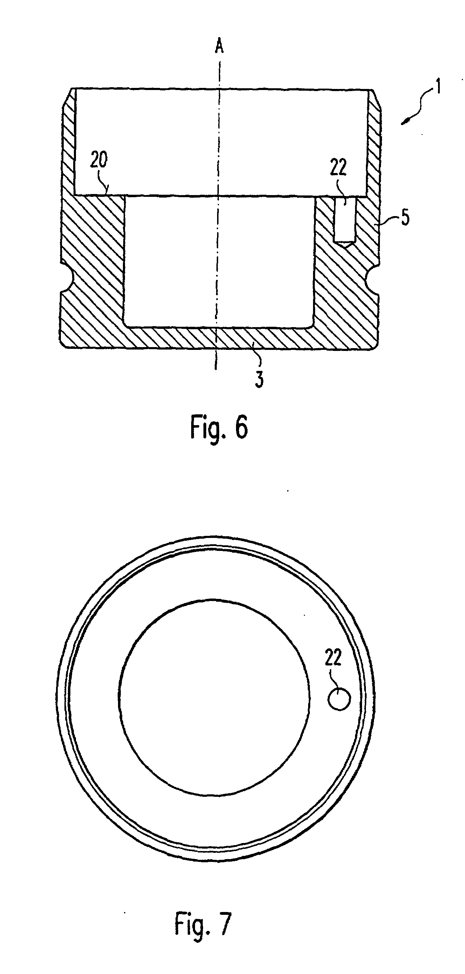

Im Inneren des Gehäuses 1 ist am Boden 3 ein meist als Piezokeramik ausgebildetes Sensorelement 7 ortsfest und elektrisch leitend befestigt. Das in seinem Aufbau einem Plattenkondensator ähnliche Sensorelement 7 weist an seiner Unterseite eine untere Elektrode auf, die so mit dem aus einem elektrisch leitfähigem Material, beispielsweise Aluminium, bestehenden Gehäuse 1 elektrisch leitend verbunden ist. An seiner Oberseite weist das Sensorelement 7 eine zur in der Zeichnung nicht dargestellten, an der Unterseite befindlichen unteren Elektrode parallele obere Elektrode 15 auf. Derartige scheibenförmige Sensorelemente können aber auch statt einem kreisförmigen Grundriss andere Plättchenformen aufweisen, beispielsweise oval, mehreckig, usw. Die obere Elektrode 15 kann dabei ebenso wie die in der Zeichnung nicht dargestellte untere Elektrode durch eine auf die Piezokeramik aufgedampfte leitende Schicht, beispielsweise aus Silber oder Gold, gebildet. Die obere Elektrode 15 ist mittels Dickdrahtbonden mit einer im Behälter im Bereich des gegenüberliegenden Abschlusses angeordneten Kontaktierungseinrichtung 9 an einer Kontaktfläche 19 elektrisch leitend verbunden. Über der Kontaktierungseinrichtung 9, die ebenfalls scheibenförmig ausgebildet sein kann, ist ein Deckel 11 angeordnet, welcher von einem als Bördelung ausgebildeten oberen Bereich des Gehäusemantels 5 in Richtung der Kontaktierungseinrichtung mit einer Kraft beaufschlagt wird und die Kontaktierungseinrichtung 9 gegen eine in Fig. 6 näher dargestellte, gerade, an der Innenwandung des Gehäusemantels ausgebildete Schulter 20 presst. An seiner Außenseite weist der Deckel 15 einen Steckeraufnahmebereich 13 auf, der beispielsweise als Stutzen ausgebildet sein kann.

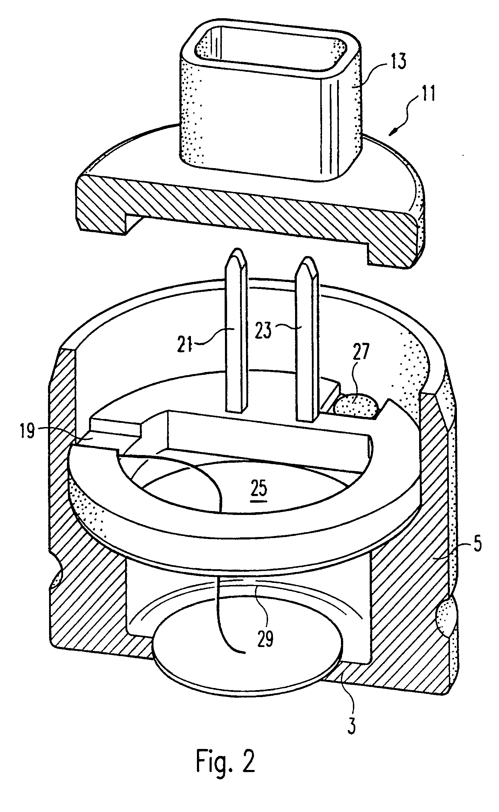

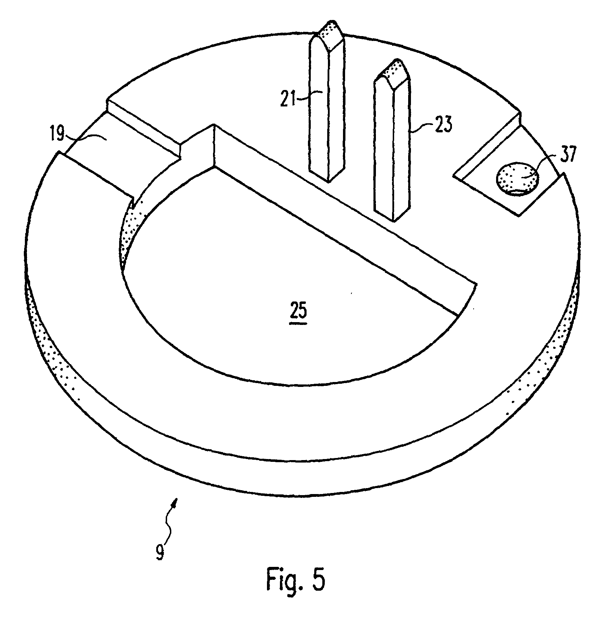

Dieser Stutzen weist beispielsweise einen rechteckförmigen Grundriss (Fig. 1) beispielsweise mit abgerundeten Ecken (Fig. 2) auf und eine Stutzenhöhe, die geeignet ist, einen darin einschiebbaren Stecker ausreichend mechanisch zu fixieren. Selbstverständlich kann ein derartiger Steckeraufnahmebereich 13 auch Rast- oder Gegenrastelemente aufweisen, die mit einem eingeschobenen Stecker bzw. dessen Gegenrast oder Rast eine gesicherte aber lösbare Verbindung gewährleisten. Wie in Fig. 1 ersichtlich, ragen im Inneren des Steckeräufnahmebereiches 13 ein erster Kontaktstift 21 und ein zweiter Kontaktstift 23 der Kontaktierungseinrichtung 9 hervor. Diese, wie in Fig. 2 ersichtlich, senkrecht in Längsrichtung der Gehäuselängsachse nach oben stehenden Kontaktstifte 21 und 23 durchdringen dabei den Deckel 11 im Bereich des Steckeraufnahmebereiches 13 mittels nicht näher dargestellter, an den Außenumfang der Kontaktstifte angepasster Ausnehmungen. Es ist aber auch denkbar, dass der Deckel 11 im gesamten Bereich des Innenumfangs des Steckeraufnahmebereiches 13 eine Ausnehmung aufweist, so dass der untere Abschluss des Steckeraufnahmebereiches 13 durch einen Teilbereich der Oberseite der Kontaktierungseinrichtung 9 gebildet wird, welcher die Kontaktstifte 21 und 23 in diesem Bereich umgibt. Zur weiteren Kontaktierung der Kontaktierungseinrichtung 9 ist in einem Randbereich der Kontaktierungseinrichtung 9 eine in Fig. 5 näher dargestellte Ausnehmung 37, beispielsweise in Form eines runden Lochs, welche in eine in Fig. 6 und Fig. 7 dargestellte ebenfalls in Längsachsrichtung, beispielsweise als Bohrung 22, ausgebildete Ausnehmung in der Schulter des Gehäusemantels 5 fluchtet. Wie in Fig. 2 angedeutet, wird die Kontaktierungseinrichtung über ihre Ausnehmung mittels eines Niets 27, welcher auch in die Ausnehmung der Schulter des Gehäusemantels 5 eingreift, an einer weiteren Kontaktfläche elektrisch leitend mit dem Gehäuse verbunden.

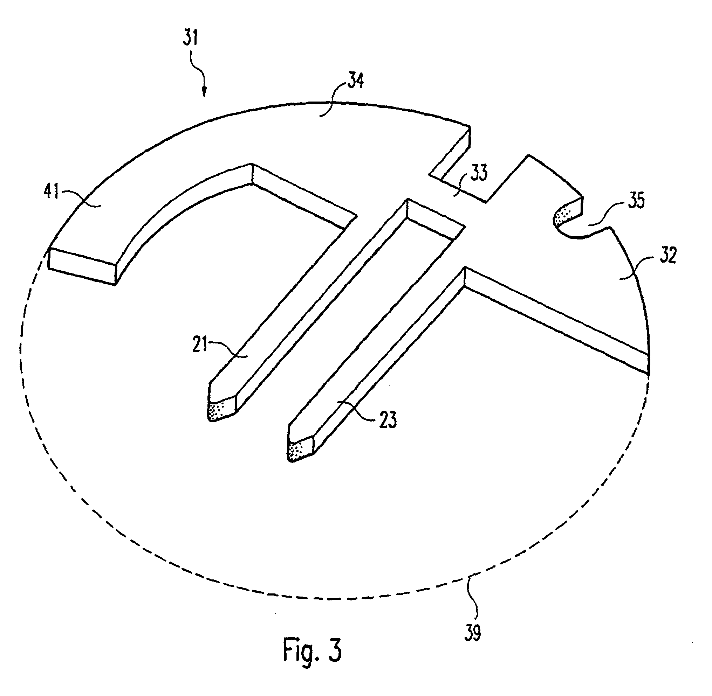

In den Fig. 3 bis 5 ist der Aufbau der Kontaktierungseinrichtung 9 in Einzelteilen und aufeinanderfolgenden Arbeitsschritten dargestellt. Fig. 3 zeigt ein Stanzgitter 31 mit zwei zueinander parallelen Kontaktstiften 21 und 23, welche mittels einer Brücke 33 verbunden sind und im unteren Drittel daran angeordnete gegenüberliegende, sich in entgegensetzte Richtungen in Form von rechtwinkligen Dreiecken erstreckende Kreissegmente 32, 34. In dem Viertelkreissegment 32 befindet sich eine in Richtung des Kreisumfangs 39 offene U-förmige Ausnehmung 35. An dem Kreissegment 34 ist entlang des Kreisumfangs 39 ein Kreisringteilbereich 41 angeordnet.

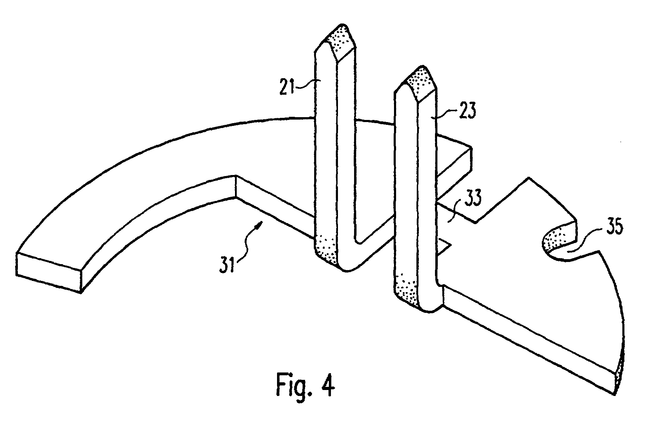

In Fig. 4 ist das Stanzgitter 31 nach einem weiteren Arbeitsschritt dargestellt. Hierbei wurden die Kontaktstifte 21 und 23 senkrecht aus der Ebene des Stanzgitters 31 nach oben gebogen.

Fig. 5 zeigt das Stanzgitter 31 nach Fig. 4 nach einem weiteren Arbeitsgang, nämlich dem Umgießen oder Umspritzen mit Kunststoff bzw. Kunstharz. Die so gefertigte Kontaktierungseinrichtung 9 weist einen scheibenförmigen Grundriss auf, welcher von einer Ausnehmung 25 außerhalb des Bereiches des darin eingegossenen Stanzgitters 31 durchbrochen ist. Die so entstehende Ausnehmung 25 weist einen 1/2-mond- oder auch 3/4-mondförmigen Grundriss auf, welcher von einem gleichmäßig dicken Kreisring an seiner runden Seite umgeben ist, wobei der gerade Abschluss im Wesentlichen die Kreissegmente 32 und 34 bzw. dessen Geraden der Ausnehmung 25 zugewandten Seiten und deren Umgießung gebildet wird. Weiterhin weist die der Kontaktierungseinrichtung 9 fluchtend zur Ausnehmung 35 des Stanzgitters 31 ein Loch 37 auf. Durch dieses Loch 37 kann, wie vorstehend beschrieben, die Kontaktierungseinrichtung mittels des Niets 27, welcher in die zu diesem Loch 37 fluchtende Ausnehmung 22 in der Schulter des Gehäusemantels eingreift, elektrisch leitend verbunden werden.

Die Brücke 33 wird in der Kontaktierungseinrichtung 9 während des Gießvorgangs mittels eines Spezialwerkzeuges getrennt, so dass der Kontaktstift 23 nur noch mit dem Kreissegment 35 und der Kontaktstift 21 mit dem Kreissegment 34 und dem Kreisrandteilstück 41 verbunden ist. Selbstverständlich kann das Trennen der Brücke 33 auch vor oder nach dem Gießvorgang geschehen.

Auf diese Weise ist, wie in Fig. 2 erkennbar, die untere Elektrode des Sensorelementes 7 über den Gehäuseboden 3 (beispielsweise mittels eines elektrisch leitfähigen Klebers), den Gehäusemantel 5 und den Niet 27, dessen Kopf im Bereich der Ausnehmung 35 das Kreissegment 32 des Stanzgitters elektrisch kontaktiert, verbunden. Der Kontaktstift 21 ist dagegen gegenüber dem Gehäuse 1 mittels der das Stanzgitter 31 umgebenden Gießharzschicht isoliert. Der Kontaktstift 21 ist so nur über das Kreissegment 34 und den Kreisteilrand 41, dessen Oberfläche in einem Teilbereich die Kontaktfläche 19 bildet, mittels Dickdrahtbonden über den Bonddraht 17 mit der oberen Elektrode des Senorelementes 7 elektrisch leitend verbunden. In dem Sensorgehäuse 1 kann in einem Raum zwischen Boden 3 und bis zur Schulter 20 bzw. der darauf liegenden Kontaktierungseinrichtung 9 ein Dämpfungsschaum 29 eingebracht sein. Dieser Dämpfungsschaum 29 verändert zum einen das Schwingverhalten des Sensors in gewünschter Weise (beispielsweise breitbandiger, geringeres Nachschwingen, usw.) und trägt zum anderen zur Lagestabilisierung des Bonddrahtes 17 bei. Auf diese Weise kann das Risiko eines unerwünschten Reißens oder Brechens des Bonddrahtes 17 verhindert werden.

Im folgenden wird das Herstellungsverfahren eines vorstehend beschriebenen Ultraschallsensors erläutert. Nach dem Einkleben des Sensorelements 7 in den Boden 3 des Gehäuses 1 wird in einem nächsten Arbeitsschritt die Kontaktierungseinrichtung 9 an der Schulter 20 der Innenseite des Gehäusemantels 5 aufliegend mit der Bohrung 37 zur Ausnehmung 22 in der Schulter fluchtend eingebracht. Dieses Einkleben kann beispielsweise mittels eines elektrisch leitfähigen Spezialklebers erfolgen. Es kann aber auch ein nichtleitender Kleber, beispielsweise Sekundenkleber, verwendet werden, wobei die Kontaktierung infolge der Rauhigkeit mindestens einer der zu kontaktierenden Flächen über die teilweise die meist sehr dünne Klebeschicht durchbrechenden Höhen oder Spitzen der rauhen Fläche erfolgt. Nachfolgend oder gleichzeitig wird die Kontaktierungseinrichtung 9 bzw. deren Kontaktstift 23 mittels eines Niets 27 mit dem Gehäuse 1 und so mit der unteren Elektrode des Sensorelements 7 elektrisch leitend verbunden. In einem weiteren Arbeitsgang wird die Kontaktfläche 19 der Kontaktierungseinrichtung 9 mit der oberen Elektrode 15 des Sensorelements 7 dickdrahtgebondet. Dieses, in Längsrichtung gesehen über zwei Ebenen, Bonden wird durch die Ausnehmung 25 ermöglicht, durch die die Bondvorrichtung hindurch auch zur oberen Elektrode 15 gelangen kann. Auf diese Weise ist der Kontaktstift 21 mittels des Bonddrahtes 17 mit der oberen Elektrode 15 des Sensorelementes verbunden.

In einem weiteren Arbeitsgang kann, wie vorstehend beschriebenen, zur gewünschten Beeinflussung der Schwingungscharakteristik der Dämpfungsschaum 29 eingebracht bzw. geschäumt werden. Nach dem Einsetzen des Deckels 11 in den über den Außenumfang der Kontakteinrichtung 9 hinausragenden Rand- bzw. Hohlzylinderbereich des Gehäusemantels 5 wird der über den Deckel 11 wiederum hinausragende obere Randbereich des Gehäusemantels 5 mittels eines Press- oder Formwerkzeuges in Richtung zur Gehäusemitte umgebogen. Auf diese Weise entsteht die in Fig. 1 ersichtliche Bördelung, welche den Deckel sicher, ortsfest fasst und einen robusten Gehäuseabschluss bildet.

Wie in Fig. 1 ersichtlich, wird durch den Steckeraufnahmebereich 13 des Deckels 11 und durch die in diesen Aufnahmebereich 13 von unten hineinragenden Kontaktstifte 21, 23 eine Steckeraufnahme mit Kontaktierung gebildet, in die ein nicht dargestellter Stecker zum Anschluss des Sensors eingesteckt und kontaktiert werden kann.

Selbstverständlich ist es auch denkbar, den Aufnahmebereich 13 und die Kontaktierung in kinematischer Umkehr auszubilden, so dass statt der Kontaktstifte 21, 23 Kontaktbuchsen vorhanden sein können. Ebenso ist es denkbar, den Aufnahmebereich 13 als Stutzen mit darin einschiebbaren Stecker als Steckerkörper auszubilden, über welchen der Stutzen bzw. Rand eines Anschlusselements geschoben werden kann.

## Patentansprüche

1. ültraschallsensor, insbesondere für ein Fahrzeug und dessen Innenraum, mit einem dosenförmigen Gehäuse (1), einem Gehäuseboden (3), einem Gehäuseabschluss (11), der dem Gehäuseboden (3) gegenüberliegt und einem am Gehäuseboden (3) angeordneten Sensorelement (7), nebst Elektroden, bei dem im Bereich des Gehäuseabschlusses eine ortsfest im Gehäuse (1) befestigte Kontaktierungseinrichtung (9) angeordnet ist, **dadurch gekennzeichnet, dass** die Kontaktierungseinrichtung eine in Richtung der Längsachse (A) des Gehäuses (1) durchbrechende Ausnehmung (25) aufweist, die derart bemessen ist, dass eine Bondvorrichtung zu einer Elektrode (15) des Sensorelements (7) am Gehäuseboden (3) gelangen kann, wobei die Kontaktierungseinrichtung (9) mit wenigstens einem Kontaktpunkt (19) mit wenigstens dieser Elektrode (15) des Sensorelements (7) mittels Dickdrahtbonden elektrisch leitend verbunden ist.

2. Ultraschallsensor nach Anspruch 1, **dadurch gekennzeichnet, dass** die Kontaktierungseinrichtung (9) als Platine oder Stanzgitter (31) ausgebildet ist.

3. Ultraschallsensor nach Anspruch 1 oder 2, **dadurch gekennzeichnet, dass** die Kontaktierungseinrichtung (9) scheibenförmig ausgebildet ist.

4. Ultraschallsensor nach einem der vorhergehenden Ansprüche, **dadurch gekennzeichnet, dass** die Kontaktierungseinrichtung (9) in Richtung zum Gehäuseboden (3) an einer an der Gehäuseinnenseite ausgebildeten Schulter (20) aufliegt.

5. Ultraschallsensor nach Anspruch 4, **dadurch gekennzeichnet, dass** die Kontaktierungseinrichtung (9) mittels Befestigungselement am Gehäuse befestigt ist.

6. Ultraschallsensor nach Anspruch 5, **dadurch gekennzeichnet, dass** das Befestigungselement als ein aus einem elektrisch leitfähigen Material bestehender Niet (27) ausgebildet ist, welcher in eine weitere Ausnehmung (37) der Kontaktierungseinrichtung (9) und in eine Ausnehmung (22) in der Schulter (20) in einer Richtung parallel zur Längsachse A des Gehäuses (1) eingreift.

7. Ultraschallsensor nach einem der vorhergehenden Ansprüche, **dadurch gekennzeichnet, dass** die Kontaktierungseinrichtung (9) an ihrer Außenseite Kontaktelemente aufweist.

8. Ultraschallsensor nach Anspruch 7, **dadurch gekennzeichnet, dass** die Kontaktelemente als nach außen gerichtete Kontaktstifte (21, 23) ausgebildet sind.

9. Ultraschallsensor nach einem der vorhergehenden Ansprüche, **dadurch gekennzeichnet, dass** der Gehäuseabschluss als in ein in das Gehäuse (1) auf die Kontaktierungseinrichtung (9) einsetzbarer Deckel (11) ausgebildet ist, welcher wenigstens durch über den Deckel (11) des Gehäusemantels (5) hinausragende und über den Umfang des Deckels zum Deckel hin gebogene Teilbereiche des Gehäusemantels gegen eine Bewegung in Richtung der Gehäuselängsachse A nach außen fixiert ist und den Deckel in der Gegenrichtung gegen die Kontaktierungseinrichtung (9) mit *einer* Kraft beaufschlagt.

10. Ultraschallsensor nach Anspruch 9, **dadurch gekennzeichnet, dass** die Teilbereiche als umlaufende Bördelung (43) ausgebildet sind.

11. Ultraschallsensor nach Anspruch 9 oder 10, **dadurch gekennzeichnet, dass** der Deckel (11) im Bereich der Kontaktelemente eine Ausnehmung aufweist.

12. Ultraschallsensor nach Anspruch 11, **dadurch gekennzeichnet, dass** sich an der Außenseite des Deckels (11) ein die Ausnehmung einschließender Steckeraufnahmebereich (13) anschließt.

13. Ultraschallsensor nach Anspruch 12, **dadurch gekennzeichnet, dass** der Steckeraufnahmebereich (13) als Stutzen ausgebildet ist.

14. Verfahren zur Herstellung eines Ultraschallsensors nach einem der vorhergehenden Ansprüche, **gekennzeichnet durch** die Verfahrensschritte:
a) Befestigen des Sensorelements (7) im Inneren des Gehäuses (1) am Gehäuseboden (3),
b) Einbringen und Befestigen der Kontaktierungseinrichtung (9) im Bereich der dem Boden (3) gegenüberliegenden Gehäuseöffung und
c) elektrisches Verbinden der Kontaktierungeinrichtung (9) und des Sensorelements (7) **durch** die Ausnehmung (25) in der Kontaktierungseinrichtung (9) mittels Bonden.

15. Verfahren zur Herstellung eines Ultraschallsensors nach Anspruch 14, **dadurch gekennzeichnet, dass** die Kontaktierungseinrichtung (9) als Stanzgitter (31) ausgebildet und in Kunststoff eingegossen wird.

16. Verfahren zur Herstellung eines Ultraschallsensors nach Anspruch 14 oder 15, **dadurch gekennzeichnet, dass** die Kontatierungseinrichtung (9) mittels wenigstens eines Befestigungselements oder mittels Presssitz im Gehäuse (1) mechanisch ortsfest gehaltert und mit diesem elektrisch leitend verbunden wird.

17. Verfahren zur Herstellung eines Ultraschallsensors nach einem der Ansprüche 14 bis 16, **dadurch gekennzeichnet, dass** über der Kontaktierungseinrichtung (9) als Gehäuseabschluss ein Deckel (11) angeordnet und befestigt wird.

18. Verfahren zur Herstellung eines Ultraschallsensors nach Anspruch 17, **dadurch gekennzeichnet, dass** über den Deckel (1) wenigstens Teilbereiche des Gehäusemantels (5) hinausragen und über den Außenumfang des Deckels (11) nach innen in Richtung zur Deckelmitte gebogen werden.

19. Verfahren zur Herstellung eines Ultraschallsensors nach Anspruch 18, **dadurch gekennzeichnet, dass** der Gehäusemantel (5) umlaufend über den Deckel (11) als Rand hinausragt und dieser Rand mittels eines Formwerkzeuges in Form einer Bördelung (43) über den Deckel (11) nach innen in Richtung zur Deckelmitte gebogen wird.

20. Verfahren zur Herstellung eines Ultraschallsensors nach einem der Ansprüche 17 bis 19, **dadurch gekennzeichnet, dass** durch die Kontaktierungseinrichtung (9) und den Dekkel (11) eine Steckeraufnahme für einen Stecker gebildet wird.

## Claims

1. Ultrasonic sensor, in particular for a vehicle and the interior thereof, having a can-shaped housing (1), a housing base (3), a housing termination (11), opposite the housing base (3), and a sensor element (7) arranged on the housing base (3), together with electrodes, in which a contact-making device (9) fixed in a stationary fashion in the housing (1) is arranged in the region of the housing termination, **characterized in that** the contact-making device has a cutout (25), which breaks through in the direction of the longitudinal axis (A) of the housing (1) and is dimensioned in such a way that a bonding device can reach an electrode (15) of the sensor element (7) on the housing base (3), the contact-making device (9) being electrically conductively connected by at least one contact point (19) to at least the said electrode (15) of the sensor element (7) by means of thick wire bonding.

2. Ultrasonic sensor according to Claim 1, **characterized in that** the contact-making device (9) is designed as a circuit board or lead frame (31).

3. Ultrasonic sensor according to Claim 1 or 2, **characterized in that** the contact-making device (9) is of disc-shaped design.

4. Ultrasonic sensor according to one of the preceding claims, **characterized in that** the contact-making device (9), in the direction of the housing base (3), bears on a shoulder (20) formed on the inside of the housing.

5. Ultrasonic sensor according to Claim 4, **characterized in that** the contact-making device (9) is fixed to the housing by means of a fixing element.

6. Ultrasonic sensor according to Claim 5, **characterized in that** the fixing element is designed as a rivet (27), which is composed of an electrically conductive material and engages in a further cutout (37) of the contact-making device (9) and in a cutout (22) in the shoulder (20) in a direction parallel to the longitudinal axis A of the housing (1).

7. Ultrasonic sensor according to one of the preceding claims, **characterized in that** the contact-making device (9) has contact elements on its outside.

8. Ultrasonic sensor according to Claim 7, **characterized in that** the contact elements are designed as outwardly directed contact pins (21, 23).

9. Ultrasonic sensor according to one of the preceding claims, **characterized in that** the housing termination is designed as a cover (11), which can be inserted into the housing (1) onto the contact-making device (9), which cover is fixed against a movement outwards in the direction of the longitudinal axis A of the housing at least by means of partial regions of the outer surface (5) of the housing, which partial regions project beyond the cover (11) of the outer surface of the housing and are bent towards the cover over the periphery of the cover, and applies a force to the cover in the opposite direction against the contact-making device (9).

10. Ultrasonic sensor according to Claim 9, **characterized in that** the partial regions are designed as a peripheral flange (43).

11. Ultrasonic sensor according to Claim 9 or 10, **characterized in that** the cover (11) has a cutout in the region of the contact elements.

12. Ultrasonic sensor according to Claim 11, **characterized in that** the outside of the cover (11) is adjoined by a plug receptacle region (13) which encloses the cutout.

13. Ultrasonic sensor according to Claim 12, **characterized in that** the plug receptacle region (13) is designed as a connector.

14. Method for producing an ultrasonic sensor according to one of the preceding claims, **characterized by** the method steps of:
a) fixing the sensor element (7) inside the housing (1) on the housing base (3),
b) introducing and fixing the contact-making device (9) in the region of the housing opening opposite the base (3), and
c) electrically connecting the contact-making device (9) and the sensor element (7) through the cutout (25) in the contact-making device (9) by means of bonding.

15. Method for producing an ultrasonic sensor according to Claim 14, **characterized in that** the contact-making device (9) is designed as a lead frame (31) and is encapsulated in plastic.

16. Method for producing an ultrasonic sensor according to Claim 14 or 15, **characterized in that** the contact-making device (9) is mechanically retained in a stationary fashion by means of at least one fixing element or by means of a press fit in the housing (1) and is electrically conductively connected to the latter.

17. Method for producing an ultrasonic sensor according to one of Claims 14 to 16, **characterized in that** a cover (11) is arranged and fixed as a housing termination above the contact-making device (9).

18. Method for producing an ultrasonic sensor according to Claim 17, **characterized in that** at least partial regions of the outer surface (5) of the housing project beyond the cover (1) and are bent inwards in the direction of the centre of the cover over the outer periphery of the cover (11).

19. Method for producing an ultrasonic sensor according to Claim 18, **characterized in that** the outer surface (5) of the housing projects peripherally beyond the cover (11) as an edge and this edge is bent inwards in the direction of the centre of the cover over the cover (11) in the form of a flange (43) by means of a die.

20. Method for producing an ultrasonic sensor according to one of Claims 17 to 19, **characterized in that** a plug receptacle for a plug is formed by the contact-making device (9) and the cover (11).

## Revendications

1. Détecteur à ultrasons, en particulier pour un véhicule et son habitacle, comportant un boîtier (1) en forme de prise, un fond de boîtier (3), une fermeture de boîtier (11) qui est située à l'opposé du fond de boîtier (3) et un élément de détecteur (7) agencé sur le fond de boîtier (3), avec des électrodes, dans lequel un dispositif d'établissement de contact (9) fixé stationnaire au boîtier (1), est agencé dans la région de la fermeture de boîtier, **caractérisé en ce que** le dispositif d'établissement de contact présente un évidement (25) traversant en direction de l'axe longitudinal (A) du boîtier (1), ledit évidement ayant des dimensions telles qu'un dispositif de liaison peut parvenir à une électrode (15) de l'élément de détection (7) sur le fond de boîtier (3), le dispositif d'établissement de contact (9) étant relié de manière à conduire le courant par au moins un point de contact avec au moins cette électrode (15) de l'élément de détection (7) au moyen de liaisons à gros fils.

2. Détecteur à ultrasons selon la revendication 1, **caractérisé en ce que** le dispositif d'établissement de contact (9) est réalisé sous forme de platine ou de grillage estampé (31).

3. Détecteur à ultrasons selon l'une ou l'autre des revendications 1 et 2, **caractérisé en ce que** le dispositif d'établissement de contact (9) est réalisé sous forme de disque.

4. Détecteur à ultrasons selon l'une quelconque des revendications précédentes, **caractérisé en ce que** le dispositif d'établissement de contact (9) repose en direction du fond de boîtier (3) sur un épaulement (20) réalisé sur la face intérieure du boîtier.

5. Détecteur à ultrasons selon la revendication 4, **caractérisé en ce que** le dispositif d'établissement de contact (9) est fixé sur le boîtier au moyen d'un élément de fixation.

6. Détecteur à ultrasons selon la revendication 5, **caractérisé en ce que** l'élément de fixation est réalisé sous forme d'un rivet (27) en matériau conducteur de courant qui s'engage dans un autre évidement (37) du dispositif d'établissement de contact (9) et dans un évidement (22) dans l'épaulement (20) dans une direction parallèlement à l'axe longitudinal A du boîtier (1).

7. Détecteur à ultrasons selon l'une quelconque des revendications précédentes, **caractérisé en ce que** le dispositif d'établissement de contact (9) présente des éléments de contact sur sa face extérieure.

8. Détecteur à ultrasons selon la revendication 7, **caractérisé en ce que** les éléments de contact sont réalisés sous forme de pointes de contact (21, 23) dirigées vers l'extérieur.

9. Détecteur à ultrasons selon l'une quelconque des revendications précédentes, **caractérisé en ce que** la fermeture de boîtier est réalisée sous forme d'un couvercle (11) qui peut être mis en place sur le dispositif d'établissement de contact (9) dans le boîtier (1), lequel est fixé au moins via des régions partielles de l'enveloppe de boîtier qui font saillie au-dessus de la périphérie du couvercle et qui sont repliées vers le couvercle, à l'encontre d'un mouvement en direction de l'axe longitudinal de boîtier A vers l'extérieur, et **en ce qu'**elle sollicite avec une force le couvercle dans la direction contraire à l'encontre du dispositif d'établissement de contact (9).

10. Détecteur à ultrasons selon la revendication 9, **caractérisé en ce que** les régions partielles sont réalisées sous forme de bord rabattu.

11. Détecteur à ultrasons selon l'une ou l'autre des revendications 9 et 10, **caractérisé en ce que** le couvercle (11) présente un évidement dans la région des éléments de contact.

12. Détecteur à ultrasons selon la revendication 11, **caractérisé en ce qu'**une région de réception de la prise (13) enfermant l'évidement se raccorde sur la face extérieure du couvercle (11).

13. Détecteur à ultrasons selon la revendication 12, **caractérisé en ce que** la région de réception de la prise (13) est réalisée sous forme de manchon.

14. Procédé de fabrication d'un détecteur à ultrasons selon l'une quelconque des revendications précédentes, **caractérisé par** les étapes de procédé suivantes :
a) fixation de l'élément de détection (7) à l'intérieur du boîtier (1) sur le fond de boîtier (3),
b) montage et fixation du dispositif d'établissement de contact (9) dans la région de l'ouverture de boîtier opposée au fond (3), et
c) liaison électrique entre le dispositif d'établissement de contact (9) et l'élément de détection (7) à travers l'évidement (25) jusque dans le dispositif d'établissement de contact (9) au moyen de liaisons.

15. Procédé de fabrication d'un détecteur à ultrasons selon la revendication 14, **caractérisé en ce que** le dispositif d'établissement de contact (9) est réalisé sous forme de grillage estampé (31) et est moulé dans de la matière plastique.

16. Procédé de fabrication d'un détecteur à ultrasons selon l'une ou l'autre des revendications 14 et 15, **caractérisé en ce que** le dispositif d'établissement de contact (9) est maintenu stationnaire au moyen d'au moins un élément de fixation, et **en ce qu'**il est relié à celui-ci de manière à conduire le courant.

17. Procédé de fabrication d'un détecteur à ultrasons selon l'une quelconque des revendications 14 à 16, **caractérisé en ce qu'**un couvercle est agencé et fixé au-dessus du dispositif d'établissement de contact (9), servant de fermeture du boîtier.

18. Procédé de fabrication d'un détecteur à ultrasons selon la revendication 17, **caractérisé en ce qu'**au moins des régions partielles de l'enveloppe de boîtier (5) font saillie au-dessus du couvercle (11) et sont repliées sur la périphérie extérieure du couvercle (11) vers l'intérieur en direction du milieu du couvercle.

19. Procédé de fabrication d'un détecteur à ultrasons selon la revendication 14, **caractérisé en ce que** l'enveloppe de boîtier (5) fait saillie sous forme de bord sur la périphérie du couvercle (11) et **en ce que** ce bord est replié au moyen d'un outil de formage sous la forme d'un bord rabattu (43) sur le couvercle (11) vers l'intérieur en direction du milieu du couvercle.

20. Procédé de fabrication d'un détecteur à ultrasons selon l'une quelconque des revendications 17 à 19, **caractérisé en ce que** par le dispositif d'établissement de contact (9) et par le couvercle (11) est formé un logement pour recevoir la prise.
